# EUROPÄISCHE PATENTANMELDUNG

(11) **EP 1 243 172 A2**
(43) Veröffentlichungstag der Anmeldung: **25.09.2002**
(21) Anmeldenummer: 02005833.5
(22) Anmeldetag: 14.03.2002
(51) Int. Cl.: A01C 7/04

(54) **Materialverzögerungseinrichtung für ein Pneumatisches Verteilersystem**

(30) Priorität: 22.03.2001 US 814595
(71) Anmelder: DEERE & COMPANY, Moline, Illinois 61265-8098 (US)
(72) Erfinder: Stephens, Lyle Eugene, Hampton, IL 61256 (US); Ferguson, Larry Patrick, Bettendorf, IA 52722 (US); Janelle, Luc, Colona, IL 61241 (US); Maas, Brian J., Bettendorf, IA 52722 (US); Olson, Jay Harold, Moline, IL 61265 (US); Gregor, David Walter, Davenport, IA 52806 (US); Wendling, Ignatz, 66482 Zweibrücken (DE)
(74) Vertreter: Holst, Sönke, Dr.

(57) **Zusammenfassung**

Die Erfindung bezieht sich auf eine Materialverzögerungseinrichtung (84) zur Verminderung der Material- und Luftgeschwindigkeit in einem pneumatischen Verteilersystem (50), die stromauf eines Auslasses (60) des pneumatischen Verteilersystems (50) angeordnet ist.

Es wird vorgeschlagen, dass die Materialverzögerungseinrichtung (84) einen hohlen Körper (86), der einen runden, insbesondere zylindrischen Abschnitt (88) mit einem stromauf gelegenen Ende (90), einem stromab gelegenen Ende (92) und eine Achse (88a) aufweist, einen Einlass (91), der sich im Wesentlichen tangential zum stromauf gelegenen Ende (90) des runden Abschnitts (88) öffnet, und einen Materialauslass (94) umfasst, der sich im Wesentlichen in axialer Richtung vom stromab gelegenen Ende des runden Abschnitts (88) öffnet und sich in der stromab gelegenen Richtung nach innen verengt, wobei der hohle Körper (86) stromauf des Materialauslasses (94) eine Öffnung (104) zur Freigabe von Luft aufweist, um die Menge an Luft, die den Materialauslass (94) verlässt, zu vermindern.

## Beschreibung

Die Erfindung betrifft eine Materialverzögerungseinrichtung zur Verminderung der Material- und Luftgeschwindigkeit in einem pneumatischen Verteilersystem, die stromauf eines Auslasses des pneumatischen Verteilersystems angeordnet ist, der das durch Luft geförderte Material in einer Furche im Boden ablegt.

Der Transport von Saatgut, Düngemitteln und ähnlichen Materialien zum Furchenöffner bei Pflanzgeräten, Sämaschinen und anderen ähnlichen Typen landwirtschaftlicher Geräte wird im Allgemeinen dadurch erleichtert, dass Luft durch eine Leitung geführt wird und die Materialien von dem Luftstrom zur Abgabe in eine vom Furchenöffner erstellte Furche mitgerissen werden. Die Materialien werden bei hohen Geschwindigkeiten in dem ein relativ hohes Volumen aufweisenden Luftstrom transportiert und oft springen sie aus der Furche hoch oder werden aus der Furche herausgeblasen, insbesondere wenn die Luft aus der Furche hinaus ausgestoßen wird. Saatgut, das hochspringt, aber in der Furche verbleibt, wird nicht im richtigen Abstand abgelegt, und das Saatgut, das aus der Furche herausspringt oder nicht nahe des Bodens der Furche platziert wird, wächst oder keimt nicht richtig und führt nicht zur Entwicklung gesunder Pflanzen. Dünge- oder Saatgutbehandlungsmittel, die falsch platziert werden, sind ineffektiv bei der Ernährung der Pflanzen oder beim Saatgutschutz.

Saatgutbremseinrichtungen zum Verlangsamen des Saatguts vor dem Ablegen in der Furche beinhalten in der Regel, dass das Saatgut gegen eine mechanische Einrichtung stößt, jedoch zerschmettert der Stoß häufig das Saatgut oder beschädigt es auf andere Weise und setzt die Einrichtung einer beträchtlichen Abnutzung aus. Grate oder Stufen, die sich irgendwo im Weg des Saatguts befinden, können das Saatgut beschädigen und eine Abnutzung des Geräts zur Folge haben. Jede Verengung des Pfades im Luftsystem kann Flussbeschränkungen und Abnutzungsbereiche zur Folge haben, und Verstopfungen durch großes Saatgut oder Verunreinigungen sind nicht ungewöhnlich. Wenn weiterhin die Luft nicht aus dem Strom herausgestoßen wird, kann das Saatgut nach einer anfänglichen Verlangsamung wieder beschleunigt werden, und eine derartige Beschleunigung kann zur Folge haben, dass das Saatgut aus der Furche herausgeblasen wird oder aus ihr herausspringt. Einrichtungen, die die Luftgeschwindigkeit nahe des Auslasses der Leitung vermindern, verlangsamen das Saatgut häufig nicht hinreichend, um Springen des Saatguts in der Furche zu vermeiden. Das Ausstoßen von Luft bringt zusätzliche Schwierigkeiten mit sich, die mit dem potentiellen Verlust von einigem geförderten Material durch den Luftausstoß und dem Aufblasen von Staub um die Maschine herum in Beziehung stehen. Wenn Siebe oder Filtereinrichtungen verwendet werden, sind die Filter möglichen Verstopfungen ausgesetzt und erfordern Reinigung oder Austausch. Das Bereitstellen einer kompakten, preiswerten und zuverlässigen Saatgutbremse, die das Saatgut nicht beschädigt, war eine fortwährende Problemquelle.

Die der Erfindung zugrunde liegende Aufgabe wird darin gesehen, eine verbesserte Materialverzögerungseinrichtung zur Verwendung in einem landwirtschaftlichen pneumatischen Verteilersystem bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Materialverzögerungseinrichtung vorgeschlagen, die geeignet ist, das Saatgut oder andere Materialien im pneumatischen Verteilersystem eines landwirtschaftlichen Geräts sanft zu verlangsamen und Luft aus dem Verteilersystem auszustoßen. Die Materialverzögerungseinrichtung ist im Wesentlichen in der Form eines Separators vom Zyklontyp und umfasst einen hohlen Körper mit einem Einlass, der sich im Wesentlichen tangential in einen runden, insbesondere zylindrischen Abschnitt öffnet. Ein Materialauslass öffnet sich in axialer Richtung des Körpers an einem trichterförmigen Abschnitt, der sich in der stromab gelegenen Richtung radial nach innen verengt. Eine Öffnung stromauf des Materialauslasses stößt Luft aus, um die Menge der aus dem Materialauslass austretenden Luft zu vermindern.

Auf diese Weise erreicht man, dass das Material sich auf einer spiralförmigen Bahn an der Wand des Körpers bewegt und durch die resultierende Reibung abgebremst wird. Die Materialverzögerungseinrichtung verlangsamt das Material durch die wirkende Zentrifugalkraft, ohne das Saatgut zu zerbrechen oder anderweitig zu beschädigen. Das Ausstoßen eines beträchtlichen Anteils der Luft in der Nähe des Furchenöffners beugt einer Wiederbeschleunigung und einem Hochspringen des Saatguts in der Furche vor. Die Materialverzögerungseinrichtung ist kompakt und kann leicht und bequem direkt oberhalb des Furchenöffners angeordnet werden. Filter oder Siebe für die Öffnung zur Freigabe von Luft sind nicht erforderlich, so dass Ursachen von Verschleiß und Verstopfungen eliminiert wurden.

Vorzugsweise ist die Achse des Einlasses zum stromab gelegenen Ende des Körpers hin abgewinkelt. Das in den hohlen Körper eintretende Material erhält eine zum Materialauslass gerichtete Geschwindigkeitskomponente und wird auf einer Spiralbahn in Richtung auf das stromab gelegene Ende geleitet.

In der Regel ist die Achse des hohlen Körpers vertikal orientiert. Der Materialauslass befindet sich dann unterhalb des Einlasses, während der Einlass etwa horizontal orientiert ist. Die Materialverzögerungseinrichtung wird vorzugsweise oberhalb des Furchenöffners nahe des Auslasses des pneumatischen Verteilersystems angeordnet. Das Material fällt dann vornehmlich durch die Wirkung der Schwerkraft durch den Materialauslass nach unten in den Auslass des Verteilersystems und gelangt in die Furche im Erdboden. Es wird kaum durch verbleibende Luft beschleunigt, die nicht durch die Öffnung zur Freigabe der Luft, sondern durch den Materialauslass strömt.

Die effektive Querschnittsfläche der Öffnung, durch die die Luft ausgestoßen wird, ist zweckmäßigerweise größer als die des Materialauslasses. Dadurch erreicht man, dass an der Öffnung dem Luftstrom ein geringerer Widerstand entgegensteht als am Materialauslass. Die Querschnittsfläche des Materialauslasses entspricht hingegen in der Regel der des Einlasses.

Um jegliche Stufen im Materialfluss zu vermeiden, auf die das Material stoßen könnte, bietet es sich an, den Einlass mit einer Bohrung zu versehen, in die eine Materialversorgungsleitung steckbar ist.

Um das Material vom Einlass zum Materialauslass zu leiten, ist eine insbesondere spiralförmige Nut in der Innenwand des hohlen Körpers vorgeschlagen, die das Material zum Materialauslass führt.

Bevorzugt ist die Öffnung zur Freigabe von Luft mit einer zylindrischen Verlängerung verbunden, die im Wesentlichen mit dem runden Abschnitt konzentrisch ist und sich stromab des Einlasses an einer zentralen Stelle im hohlen Körper öffnet, so dass die Luft ohne Verlust an transportiertem Material entweicht.

Das Material reibt an der inneren Oberfläche des hohlen Körpers entlang. Um im Verschleißfall eine preisgünstige Reparatur zu ermöglichen, ist vorgeschlagen, im Inneren des hohlen Körpers einen austauschbaren Verschleißeinsatz anzubringen. Der Verschleißeinsatz ist in dem hohlen Körper, der einen zylindrischen oder auf beliebige andere Weise runden Abschnitt mit vorbestimmten Abmessungen aufweist, positionierbar. Der Körper weist an einem stromauf gelegenen Ende einen Einlass und an einem stromab gelegenen Ende einen Auslass auf. Der austauschbare Verschleißeinsatz umfasst ein hohles, zylindrisches Element mit einer inneren Verschleißoberfläche und einem äußeren Durchmesser, der näherungsweise gleich den vorbestimmten Abmessungen, aber etwas kleiner ist als die vorbestimmten Abmessungen. Der Verschleißeinsatz ist in den hohlen Körper einsetzbar und umfasst eine den Einlass aufnehmende Fläche, die mit dem Einlass ausrichtbar ist, um von einem Luftstrom herantransportiertes Saatgut und anderes Pflanzmaterial aufzunehmen und das Material um die innere Verschleißoberfläche herum und zum Materialauslass zu leiten. Es ist für Reparatur- oder Austauschzwecke eine Befestigungsstruktur zum lösbaren Befestigen des Verschleißeinsatzes im Körper vorgesehen.

Die innere Verschleißoberfläche kann mit einer insbesondere spiralförmigen Nut zum Führen des Materials entlang der inneren Verschleißoberfläche versehen sein.

Die Befestigungsstruktur des Verschleißeinsatzes kann eine Kappe mit einer Öffnung zum Ausstoßen von Luft umfassen. Die Öffnung kann eine axial in den hohlen Körper ragende Verlängerung umfassen, um Luft aus einem zentralen Teil der Materialverzögerungseinrichtung auszustoßen.

Die vorliegende Erfindung ist an pneumatischen Sämaschinen verwendbar, insbesondere pneumatischen Einzelkornsägeräten und Drillmaschinen. Sie weisen einen Vorratsbehälter auf, aus dem auszubringendes Material zugemessen und durch das pneumatische Verteilersystem pneumatisch zu einer Furche geleitet wird. Stromauf der Furche verringert die erfindungsgemäße Materialverzögerungseinrichtung die Geschwindigkeit des Saatguts und entfernt einen beträchtlichen Anteil des Luftstroms.

Vorzugsweise ist bei einem derartigen Gerät die Öffnung zur Freigabe von Luft mit einer Rückführungsleitung verbunden, die die ausgestoßene Luft stromauf des Einlasses der Materialverzögerungseinrichtung wieder dem pneumatischen Verteilersystem zuführt. Die Luft kann einen Einlass der Luftversorgung oder einem Vorratsbehälter zugeführt werden.

In den Zeichnungen sind vier nachfolgend näher beschriebene Ausführungsbeispiele der Erfindung dargestellt. Es zeigt:
- Fig. 1: eine perspektivische Ansicht eines Öffnerzusammenbaus mit einer an dem Abgaberohr eines Geräts angebrachten Materialverzögerungseinrichtung,
- Fig. 2: eine vergrößerte perspektivische Ansicht der Materialverzögerungseinrichtung der Figur 1,
- Fig. 3: eine alternative Ausführungsform der Materialverzögerungseinrichtung einschließlich einer Rückführungsleitung von dem Ausstoß, die mit einem Luftversorgungseinlass oder Materialbehälter am Gerät verbunden ist,
- Fig. 4: eine perspektivische Ansicht einer Materialverzögerungseinrichtung mit einer integriert gegossenen Nut zur Führung von Material zum Auslass hin, und
- Fig. 5: eine perspektivische Ansicht einer Materialverzögerungseinrichtung mit einem austauschbaren Verschleißeinsatz.

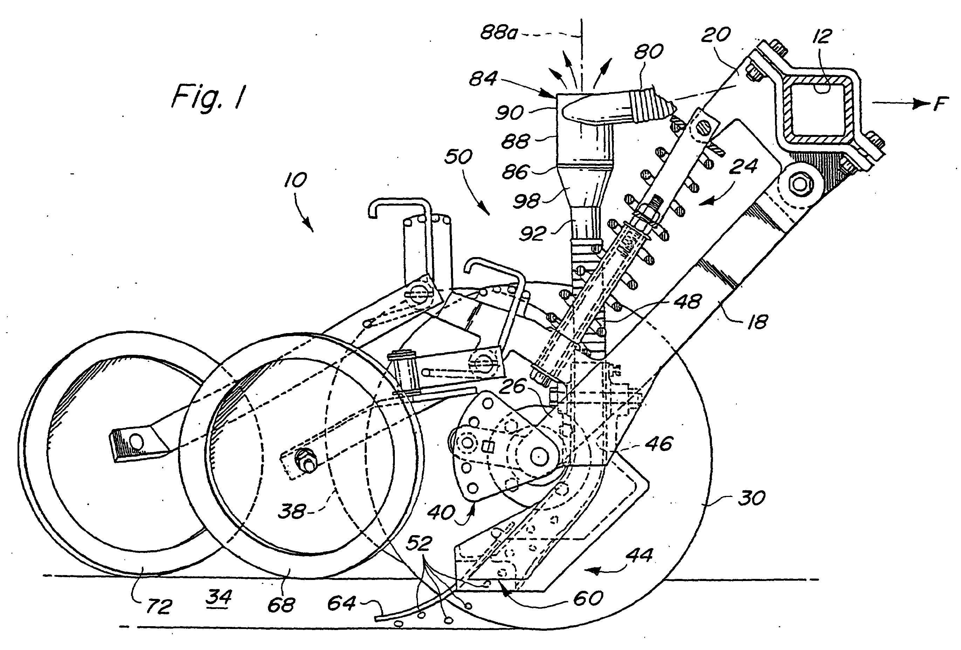

Es wird auf Figur 1 Bezug genommen, in der ein Gerät 10 zur Materialeinbringung in den Erdboden gezeigt ist, das mit einem Geräterahmenrohr 12 zur Vorwärtsbewegung (F) über den Boden verbunden ist. Das Gerät 10, das als Drillmaschinenöffner für Korn dargestellt ist, umfasst eine Zugstange oder einen Arm 18, der über eine Halterungsstruktur 20 mit dem Geräterahmenrohr 12 schwenkbar verbunden ist und durch einen mit der Halterungsstruktur 20 und dem unteren, hinteren Ende 26 der Zugstange 18 verbundenen Federzusammenbau 24 nach unten in Eingriff mit dem Erdboden vorgespannt wird. Eine Öffnerscheibe 30 ist am Ende 26 um eine von der Vorwärtsrichtung versetzte Achse drehbar angebracht, um eine schmale Material aufnehmende Furche 34 im Boden zu formen. Ein Tiefeneinstellrad 38 ist an einem Tiefeneinstellzusammenbau 40 in der Nähe der vorlaufenden Seite der Öffnerscheibe 30 angeordnet, um die Furchentiefe zu steuern und den Boden an einer Seite der Furche 34 zu verfestigen.

Ein Säscharzusammenbau 44 ist am hinteren Ende 26 in der Nähe der nachlaufenden Seite der Öffnerscheibe 30 im Schatten der Öffnerscheibe 30 abgestützt. Der Säscharzusammenbau 44 umfasst ein aufrechtes Saatgutrohr 46, das sich von einer Stelle oberhalb des Arms 18 erstreckt, wo das Saatgutrohr 46 mit dem unteren Ende einer aufrechten Leitung 48 verbunden ist, die Teil eines pneumatischen Verteilersystems 50 ist. Saatgut und/oder Dünger oder andere Materialien, die insgesamt mit 52 gekennzeichnet sind und von (nicht gezeigten) Vorratseinrichtungen am Gerät 10 zugemessen werden, werden von einem Luftstrom mitgerissen und durch das pneumatische Verteilersystem 50 gefördert, um dem Säscharzusammenbau 44 zugeführt und in der Furche 34 platziert zu werden. Das Material 52 strömt durch die Leitung 48 und das Saatgutrohr 46 nach unten und tritt dann an einem Auslass 60, der sich nach unten und hinten öffnet, aus dem Saatgutrohr 46 in die Furche 34 aus. Eine Saatgutandrücklasche 64 erstreckt sich vom hinteren, unteren Ende des Auslasses 60 nach unten und hinten. Ein vom Arm 18 abgestützter Andrückradzusammenbau 68 hinter der Öffnerscheibe 30 hilft, das Saatgut fest im unteren Abschnitt der Furche zu positionieren und den Kontakt des Saatguts mit dem Boden zu vergrößern. Ein Schließrad 72 klappt Boden von der gegenüberliegenden Furchenwand zusammen und drückt den Boden gegen das Material 52.

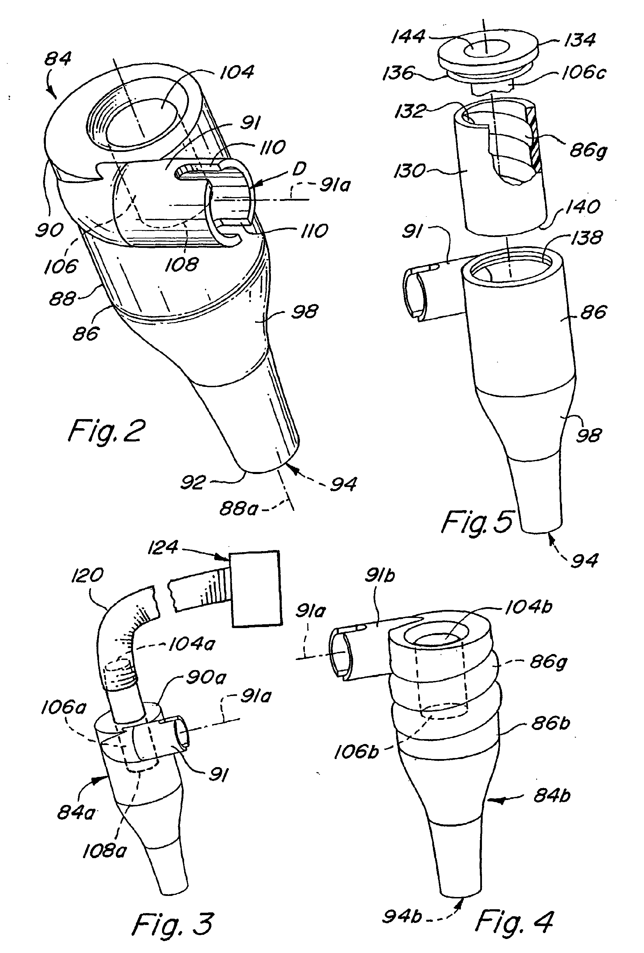

Das pneumatische Verteilersystem 50 umfasst eine Materialversorgungsleitung 80, in der Saatgut oder Saatgut und Dünger oder anderes, ähnliches Material durch ein Luftvolumen vom Lagerungsort fort gefördert wird. Eine Materialverzögerungseinrichtung 84, im Wesentlichen in der Form eines Späneabscheiders, umfasst einen hohlen Körper 86 mit einem zylindrischen Abschnitt 88 mit einer Zylinderachse 88a (Figur 2). Der Körper 86 umfasst ein stromauf gelegenes Ende 90 mit einem sich am stromauf gelegenen Ende 90 im Wesentlichen tangential in den zylindrischen Abschnitt 88 öffnenden Einlass 91. Ein stromab gelegenes Ende 92 mit einem Materialauslass 94 öffnet sich in der axialen Richtung nach unten und umfasst einen stumpfförmigen konisch geformten Abschnitt 98, der sich vom zylindrischen Abschnitt 88 zum Materialauslass 94 (d.h. in der stromab gelegenen Richtung) radial nach innen verjüngt. Der Körper 86 umfasst eine Öffnung 104 nahe der Oberseite des zylindrischen Abschnitts 88, um Luft stromauf des Materialauslasses 94 freizugeben und den Betrag der den Materialauslass 94 verlassenden Luft zu verringern. Die Öffnung 104 umfasst eine zylindrische Verlängerung 106, die im Wesentlichen mit dem Abschnitt 88 konzentrisch ist und sich an einer zentralen Stelle 108 unterhalb des Einlasses 91 nach unten öffnet, so dass die Luft ohne Verlust an gewünschtem Material 52, das transportiert wird, entkommt.

Das äußere Ende des Einlasses 91 ist an einer Fläche 110 geschlitzt und hat einen inneren Durchmesser (D in Figur 2), der näherungsweise gleich, jedoch geringfügig größer ist als der äußere Durchmesser der Materialversorgungsleitung 80. Die Materialversorgungsleitung 80 wird in den Einlass 91 eingesetzt und eine Klemme 112 wird gegenüber der äußeren Endfläche 110 festgezogen, um die Materialversorgungsleitung 80 innerhalb des Einlasses 91 festzuhalten. Das Platzieren der Leitung 80 innerhalb des Einlasses 91 vermeidet eine mit einer Stufe versehene Fläche, die abnutzen und eine Quelle für Saatgutbeschädigungen sein könnte. Das untere Ende der Leitung 48 ist am aufrechten Saatgutrohr 46 befestigt und das obere Ende ist über dem Materialauslass 94 positioniert und an dem stromab gelegenen Ende 92 der Materialverzögerungseinrichtung 84 festgeklemmt.

Der Einlass 91 hat eine Achse 91a, die mehrere Winkelgrade gegenüber einer gedachten Ebene, die sich senkrecht zur Achse 88a erstreckt, nach unten abgewinkelt ist, um dem in die Materialverzögerungseinrichtung 84 eintretenden Material 52 eine leichte axiale Komponente zu verleihen, so dass das Material 52 zum Materialauslass 94 geleitet wird. Vorzugsweise ist der Winkel zwischen der Achse 91a und der Ebene etwa fünf Grad. Saatgut und anderes Material, das in die Materialverzögerungseinrichtung 84 eintritt, wird bestrebt sein, einem spiralförmigen Weg entlang der inneren Oberfläche des zylindrischen Abschnitts 88 zu folgen. Wenn sich das Material 52 auf den Materialauslass 94 zu bewegt, verlangsamt die durch die Zentrifugalkräfte bedingte Reibung das Material 52 sanft, ohne Beschädigung des Materials 52. Das Material 52 folgt einem spiralförmigen Weg entlang des Abschnitts 98 und tritt aus dem stromab gelegenen Ende 92 aus. Ein wesentlicher Anteil des fördernden Luftstroms verlässt die Materialverzögerungseinrichtung 84 an der Öffnung 104 durch die Verlängerung 106. Vorzugsweise ist der effektive Querschnitt der Öffnung 104 größer als die Fläche des Materialauslasses 94, so dass die Luft effektiv ausgestoßen werden kann. Bei einer im Wesentlichen in einem Maßstab, wie er in den Zeichnungen dargestellt ist, aufgebauten Materialverzögerungseinrichtung 84 werden etwa neunzig Prozent der Luft über die Öffnung 104 ausgestoßen.

Das Saatgut und/oder andere Material 52 fallen unter dem Einfluss der Schwerkraft durch die Leitung 48 und das Saatgutrohr 46. Durch das Eliminieren der meisten Luft aus dem Materialweg und das Verzögern des Materials direkt oberhalb des Saatgutrohrs 46 ist die Geschwindigkeit des Materials 52 wesentlich reduziert und eine durch einen Luftfluss bedingte Materialbeschleunigung stromab der Materialverzögerungseinrichtung 84 ist im Wesentlichen eliminiert. Daher ist ein Herausblasen und Verspringen des Materials 52 aus der Furche 34 und ein Springen von Material 52 in der Furche 34 im Wesentlichen vermieden. Die Materialverzögerungseinrichtung 84 ist kompakt und wird unschwer direkt oberhalb des Öffners zwischen den Leitungen 48 und 80 hinter und im Wesentlichen unterhalb des Rahmens 12 angebracht.

Bei einer alternativen Ausführungsform (Figur 3) umfasst eine Materialverzögerungseinrichtung 84a eine Verlängerung 106a, die vom stromauf gelegenen Ende 90a übersteht und eine Rückführungsleitung 120 aufnimmt, die eine Ausstoßöffnung 104a mit einer entfernten Stelle 124 verbindet. Vorzugsweise ist die Stelle 124 ein Teil des pneumatischen Verteilersystems 50 stromauf des Einlasses 91. Die Stelle 124 kann beispielsweise der Einlass eines Luftversorgungsventilators 124 oder ein Materialvorratsbehälter oder Behältnis an der Vorratslagerstelle des Gerät sein. Die Rückführungsleitung 120 kann daher vorteilhafterweise zur Rezirkulation verwendet werden, um die Effizienz des pneumatischen Verteilersystems 50 zu vergrößern, wie auch um ein im Wesentlichen geschlossenes System bereitzustellen, um Probleme mit Staub und dem Verlust feiner Materialien in die Atmosphäre zu vermeiden, ohne dass Filter oder dergleichen erforderlich sind. Bei einer weiteren Modifikation kann die Stelle 124 eine Auslassöffnung sein, die in der Nähe des Bodens oder leicht in ihn eindringend angeordnet ist, um Staub und andere feine Materialien auf oder in den Boden zu leiten. Vorzugsweise ist die Bodenstelle von der Fläche der Furche, wo das Saatgut zum jeweiligen Zeitpunkt abgelegt wird, versetzt, um eine Beschleunigung des Saatguts oder ein Herausblasen von Saatgut oder Schmutz aus der Furche 34 zu vermeiden.

In der in Figur 4 gezeigten Ausführungsform umfasst eine Materialverzögerungseinrichtung 84b einen Einlass 91b mit einem hohlen Körper 86b, der eine Nut 86g zur Führung des Materials 52 zum Materialauslass 94b hat. Die Achse 91a des Einlasses 91b ist leicht zum Auslass 94b abgewinkelt, um eine Bewegung in Richtung der Nut 86g zu erzeugen, die als im Wesentlichen spiralförmig gezeigt ist. Luft wird über die Verlängerung 106b durch den Auslass 104b ausgestoßen.

In der in Figur 5 dargestellten Ausführungsform ist ein austauschbarer Verschleißeinsatz 130 mit einer im Einlass 91 aufgenommenen Öffnung 132 verschiebbar innerhalb des hohlen Körpers 86 aufgenommen und gegenüber dem Körper 86 in einer konventionellen Weise indiziert, wie zum Beispiel mit einem Grat und einer damit zusammenpassenden Nut, so dass die Öffnung 132 mit dem Einlass 91 ausgerichtet ist. Eine Kappe 134 mit einer Luftausstoßverlängerung 106c (in Figur 5 teilweise fortgelassen, um das Innere des Verschleißeinsatzes 130 besser zu zeigen) umfasst einen Einschnappring 136, der mit einer gegossenen Nut 138 in der Oberseite des Körpers 86 zusammenpasst, um den Verschleißeinsatz 130 innerhalb des Körpers 86 zu sichern, wobei eine untere Kante 140 des Verschleißeinsatzes 130 am konisch geformten Abschnitt 98 endet. Luft wird durch die Verlängerung 106c ausgestoßen, die sich bei 144 durch die Kappe 134 öffnet. Nuten 86g können auch im Verschleißeinsatz 130 bereitgestellt sein, um eine Führung des Materials 52 in Richtung auf den Materialauslass 94 zu unterstützen. In der dargestellten Ausführungsform unterstützen die Nuten 86g die Förderung des Materials 52 auf einem spiralförmigen Weg zum Materialauslass 94. Der Verschleißeinsatz 130 kann alternativ nicht mit Nuten versehen sein.

Der Körper 86 kann unter Verwendung einer Vielzahl konventioneller Methoden hergestellt werden, einschließlich durch ein Kunststoff-Spritzguss-Verfahren. Der Verschleißeinsatz 130 kann aus einem abnutzungsresistenten Kunststoffmaterial oder einem korrosionsresistenten Metall, wie Edelstahl, hergestellt sein. Der Verschleißeinsatz ist vorzugsweise aus einem Polyethylen mit ultrahohem Molekulargewicht (UHWM-PE) oder Urethan hergestellt.

## Patentansprüche

1. Materialverzögerungseinrichtung (84) zur Verminderung der Material- und Luftgeschwindigkeit in einem pneumatischen Verteilersystem (50), die stromauf eines Auslasses (60) des pneumatischen Verteilersystems (50) angeordnet ist, der das durch Luft geförderte Material (52) in einer Furche (34) im Boden ablegt, **dadurch gekennzeichnet, dass** die Materialverzögerungseinrichtung (84) einen hohlen Körper (86), der einen runden, insbesondere zylindrischen Abschnitt (88) mit einem stromauf gelegenen Ende (90), einem stromab gelegenen Ende (92) und eine Achse (88a) aufweist,
einen Einlass (91), der sich im Wesentlichen tangential zum stromauf gelegenen Ende (90) des runden Abschnitts (88) öffnet, und
einen Materialauslass (94) umfasst, der sich im Wesentlichen in axialer Richtung am stromab gelegenen Ende (92) des runden Abschnitts (88) öffnet und sich in der stromab gelegenen Richtung nach innen verengt, wobei der hohle Körper (86) stromauf des Materialauslasses (94) eine Öffnung (104) zur Freigabe von Luft aufweist, um die Menge an Luft, die den Materialauslass (94) verlässt, zu vermindern.

2. Materialverzögerungseinrichtung (84) nach Anspruch 1, **dadurch gekennzeichnet, dass** der Einlass (91) eine Achse (91a) hat, die leicht zum stromab gelegenen Ende (92) des Körpers (86) hin abgewinkelt ist, insbesondere in einem Winkel von größenordnungsmäßig fünf Grad gegenüber einer sich quer zur Achse (88a) des runden Abschnitts erstreckenden Ebene.

3. Materialverzögerungseinrichtung (84) nach Anspruch 1 oder 2, **dadurch gekennzeichnet, dass** die Achse (88a) des runden Abschnitts (88) senkrecht ist und sich der Materialauslass (94) unterhalb des Einlasses (91) befindet.

4. Materialverzögerungseinrichtung (84) nach Anspruch 3, **dadurch gekennzeichnet, dass** sich der Materialauslass (94) nach unten zum Auslass (60) hin öffnet, so dass das Material (52) durch Gravitationswirkung zum Auslass (60) hin fällt.

5. Materialverzögerungseinrichtung (84) nach einem der vorhergehenden Ansprüche, **dadurch gekennzeichnet, dass** die Öffnung (104) zur Freigabe von Luft eine effektive Fläche hat, die größer als die des Materialauslasses (94) ist.

6. Materialverzögerungseinrichtung (84) nach einem der vorhergehenden Ansprüche, **dadurch gekennzeichnet, dass** eine Materialversorgungsleitung (80) in einer Bohrung des Einlasses (91) aufgenommen ist.

7. Materialverzögerungseinrichtung (84) nach einem der vorhergehenden Ansprüche, **dadurch gekennzeichnet, dass** innerhalb des hohlen Körpers (86) eine Nut (86g) angeordnet ist, die das Material (52) zum Materialauslass (94) leitet.

8. Materialverzögerungseinrichtung (84) nach einem der vorhergehenden Ansprüche, **dadurch gekennzeichnet, dass** die Öffnung (104) zur Freigabe von Luft mit einer zylindrischen Verlängerung (106) verbunden ist, die im Wesentlichen mit dem runden Abschnitt (88) konzentrisch ist und sich stromab des Einlasses (91) an einer zentralen Stelle im hohlen Körper (86) öffnet.

9. Materialverzögerungseinrichtung (84) nach einem der vorhergehenden Ansprüche, **dadurch gekennzeichnet, dass** ein austauschbarer Verschleißeinsatz (130) innerhalb des hohlen Körpers (86) angeordnet ist, gegen den das Material (52) stößt.

10. Verschleißeinsatz (130) für eine Materialverzögerungseinrichtung (84) nach Anspruch 8, **dadurch gekennzeichnet, dass** er ein hohles, zylindrisches Element mit einer inneren Verschleißoberfläche und einem äußeren Durchmesser ist, der näherungsweise gleich dem inneren Durchmesser des hohlen Körpers (86) ist, aber geringfügig geringer, wobei eine Befestigungsstruktur zum lösbaren Befestigen des Elements im Körper (86) vorgesehen ist.

11. Verschleißeinsatz nach Anspruch 10, **dadurch gekennzeichnet, dass** die Befestigungsstruktur eine Kappe (134) mit einer Öffnung (104) zur Freigabe von Luft umfasst.

12. Gerät (10) zum Einbringen vom Material (52) in den Erdboden, insbesondere Drillmaschine oder Einzelkornsägerät, mit einem pneumatischen Verteilersystem (50), das auszubringendes Material (52) pneumatisch zu einem Auslass (60) des pneumatischen Verteilersystems (50) fördert, der das Material (52) in einer Furche (34) im Boden ablegt, **gekennzeichnet durch** eine stromauf des Auslasses (60) angeordnete Materialverzögerungseinrichtung (84) nach einem der Ansprüche 1 bis 9.

13. Gerät (10) nach Anspruch 12, **dadurch gekennzeichnet, dass** eine Rückführungsleitung (120) mit der Öffnung (104) zur Freigabe von Luft verbunden ist und ausgestoßene Luft an eine Stelle (124) des pneumatischen Verteilersystems (50) stromauf des Einlasses (91) abgibt.
